# EUROPÄISCHE PATENTSCHRIFT

(11) **EP 0 627 574 B1**
(45) Veröffentlichungstag und Bekanntmachung des Hinweises auf die Patenterteilung: **26.11.1997**
(21) Anmeldenummer: 94107437.9
(22) Anmeldetag: 13.05.1994
(51) Int. Cl.: F16F 15/12, F16F 15/16

(54) **Drehschwingungsdämpfer**
Torsional libration damper
Amortisseur de vibrations torsionelles

(30) Priorität: 01.06.1993 DE 4318165
(43) Veröffentlichungstag der Anmeldung: 07.12.1994
(73) Patentinhaber: Patentverwertungsgesellschaft Rohs Voigt mbH, 52351 Düren (DE)
(72) Erfinder: Rohs, Ulrich, Dr.-Ing., 52351 Düren (DE); Heidingsfeld, Dietmar, Dipl.-Ing., D-52078 Aachen (DE)
(74) Vertreter: Castell, Klaus, Dr.-Ing.

(56) Entgegenhaltungen:
- DE-A- 3 918 063
- DE-A- 4 324 452

## Beschreibung

Die Erfindung betrifft einen Drehschwingungsdämpfer nach dem Oberbegriff des Anspruches 1 oder 2.

Ein solcher Drehschwingungsdämpfer ist aus der DE 39 18 063 A1 bekannt. Dabei sind die Planetenzahnräder als Stirnzahnräder ausgebildet, die mit einer als Hohlzahnrad ausgebildeten Primärmasse in Zahneingriff stehen und ohne Achszapfen flächig zwischen axialen Stirnplatten in Taschen eines Planetenradträgers der Sekundärmasse gehalten sind.

Dies bedingt, daß sich die Ansaug- und Druckseiten der so gebildeten Zahnradpumpen an den radial außen liegenden Zahneingriffsstellen von Planetenzahnrädern und Primärmasse befinden müssen. Jeder Druckkanal ist mit einer Speicherkammer mit elastisch veränderbarem Volumen versehen und über jeweils ein drehzahlabhängig gesteuertes Kolbenventil zur Drosselung der Druckleitung sowie je einem Überdruckventil mit der Ansaugseite der nächsten Zahnradpumpe verbunden.

Der vorliegenden Erfindung liegt die Aufgabe zugrunde, einen Drehschwingungsdämpfer nach diesem Prinzip so zu gestalten und zu verbessern, daß er beträchtlich billiger herstellbar ist und seine Einzeleinrichtungen bei gleichzeitiger Verbesserung ihrer Eigenschaften einfacher gestaltet sind.

Eine wesentliche Lösung der gestellten Aufgabe besteht in den kennzeichnenden Merkmalen des Anspruches 1 oder alternativ des Anspruches 2.

Die Verwendung von Kegelzahnrädern oder zylindrischen Kronrädern anstelle der bekannten Stirnzahnräder als Planetenzahnräder ermöglicht eine vereinfachte Ausführung des sie haltenden Gehäuses. Es ist besonders günstig, daß das Spiel der Planetenzahnräder nur von der Gestaltung eines einzigen Bauteiles, nämlich des Planetenradträgers der Sekundärmasse abhängt und somit komplizierte Toleranzen gegenüber Stirnwänden und dgl. vermieden werden. Hierdurch ergibt sich eine hohe hydraulische Dichtigkeit zwischen Primär- und Sekundärmasse. Kronräder bieten den zusätzlichen Vorteil, daß sie mit Stirnverzahnungsmaschinen hergestellt werden können.

Weitere Verbesserungen hinsichtlich einer wirtschaftlicheren Fertigung ergeben sich aus den Merkmalen der Unteransprüche.

Nachstehend ist die Erfindung anhand eines in der Zeichnung dargestellten Ausführungsbeispieles näher erläutert. Es zeigen:
- Fig.1: einen axialen Längsschnitt durch einen Drehschwingungsdämpfer nach der Erfindung,
- Fig.2: eine Draufsicht auf den Planetenradträger der Sekundärmasse in Richtung II in Fig.1,
- Fig.3: einen axialen Schnitt durch die Sekundärmasse nach der Linie III-III,
- Fig. 4: einen axialen Schnitt nach der Linie IV-IV in Fig.2 und
- Fig.5: einen Querschnitt nach der Linie V-V in Fig.3.
- Fig.6: einen Querschnitt ähnlich Fig.5 bei einer abgewandelten Ausführung und
- Fig.7: einen axialen Längsschnitt ähnlich Fig.1 mit als Kronrädern ausgebildeten Planetenzahnrädern.

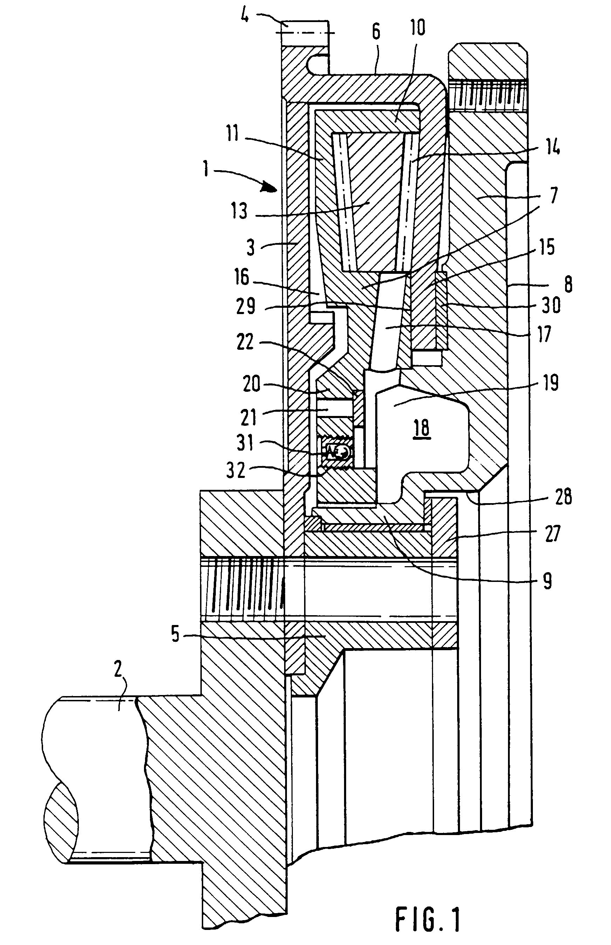

Die Zeichnung zeigt in Fig.1 einen Drehschwingungsdämpfer mit einer antriebsseitigen Primärmasse 1, die aus einer mit der Antriebswelle 2 verbindbaren Scheibe 3 mit Außenverzahnung 4, einer Nabe 5 und einem im Längsschnitt U-förmigen Rand 6 besteht. Dieser Rand 6 ist vorteilhaft aus Stahlblech hergestellt.

Auf der Nabe 5 sitzt eine zweiteilige Sekundärmasse 7. Sie besteht aus einem abtriebsseitigen Kupplungsteil 8 mit einer auf der Nabe 5 gleitend gelagerten konzentrischen Nabe 9 und einem auf der Nabe 9 befestigten Planetenradträger 10.

Die Nabe 5 weist ein flanschartiges Ende 27 auf, das in eine ringförmige Ausnehmung 28 der Nabe 9 eingreift und mit dieser ein Axiallager bildet. Da insbesondere durch Biegungen der Kurbelwelle eines Motors relativ starke Axialschwingungen auftreten können, ist bei diesem Axiallager vorteilhaft ein relativ großes Spiel, z.B. in der Größenordnung von 0,6mm vorgesehen, so daß der Drehschwingungsdämpfer auch die Axialschwingungen zu dämpfen vermag.

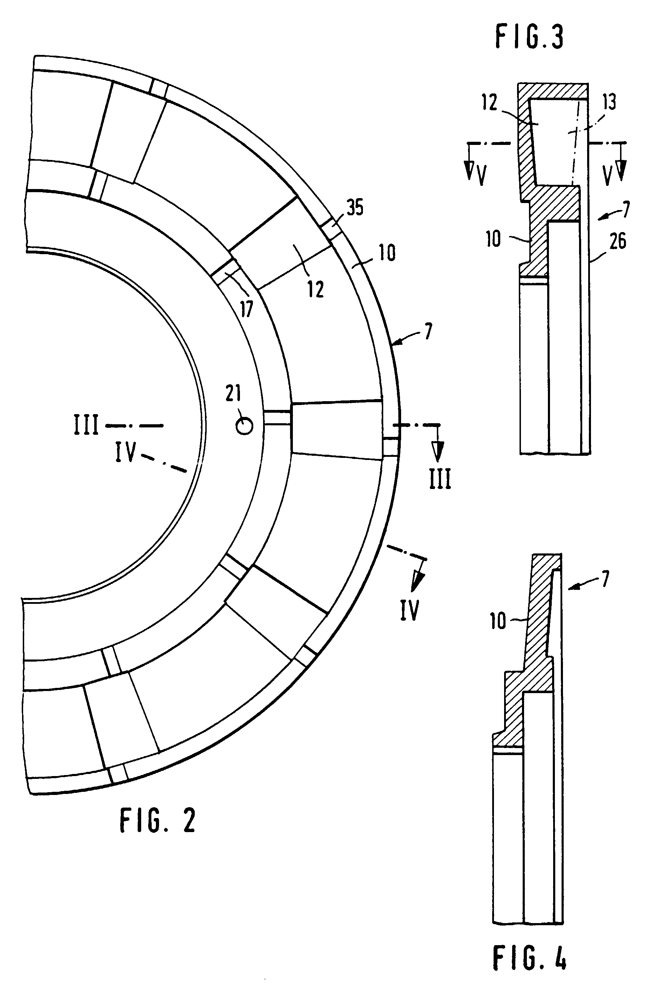

Der Planetenträger 10 ist im wesentlichen, wie die Fig. 3 und 4 zeigen, scheibenförmig ausgebildet und weist an seinem Rand 11 gleichmäßig verteilte kegelstumpfförmige Taschen 12 auf, die sich radial nach außen erweitern. In diesen Taschen 12 sind zapfenlose Kegelzahnräder 13 aufgenommen, die mit einer entsprechenden Kegelradverzahnung 14 am freien Schenkel 15 des U-förmigen Randes 6 der Primärmasse 1 in Zahneingriff stehen. Die Verzahnung dieses Randes 6 ist vorteilhaft spanlos aus dem Blech geformt. Die Planetenzahnräder 13 können mit an sich bekannten Einrichtungen für einen Druckausgleich versehen sein, z.B. (nicht dargestellten) radialen oder axialen Bohrungen.

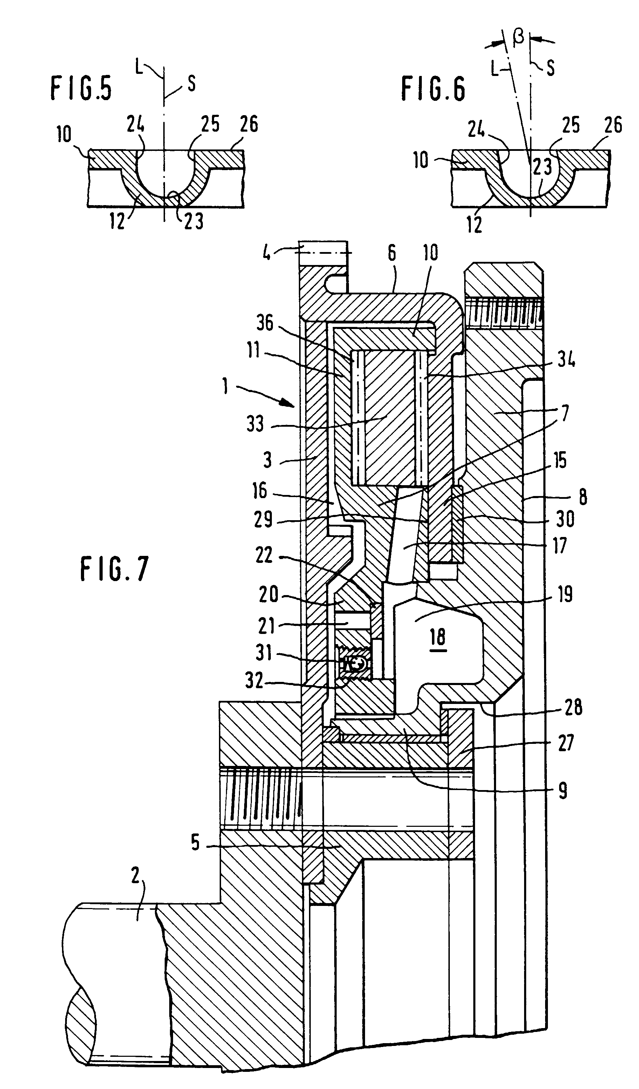

Wie Fig.5 zeigt, bilden die Querschnitte der Taschen 12 jeweils einen Halbkreis 23 mit angesetzten tangentialen Verlängerungen 24,25. In der Regel fällt die Längsmittelebene L der Tasche 12 mit der Senkrechten S zusammen, die auf der Ebene der Außenseite 26 des Planetenradträgers 10 steht.

Wie Fig.6 zeigt, kann es auch vorteilhaft sein, die Längsmittelebene L um einen Winkel β gegenüber der Senkrechten S zu schränken. Dann sind die vorlaufenden tangentialen Verlängerungen 25 kürzer als die Nachlaufenden 24. Auf diese Weise ist das Planetenrad 13 in Druckrichtung weiter umschlungen als im Falle der Fig.5. Es ist auch möglich, den Schränkungswinkel β negativ, d.h. in der anderen Richtung vorzusehen.

In beiden Fällen lassen sich die Taschen 12 auf einfache Weise von außen mit Bearbeitungswerkzeugen errreichen.

Der Planetenradträger 10 ist antriebsseitig von der Scheibe 3 der Primärmasse 1 sowie abtriebsseitig vom Rand 6 der Primärmasse 1 begrenzt und bildet mit dieser einen Ansaugraum 16, wobei die Ansaugstellen 35 für die Zahnradpumpen im radial äußersten Bereich des Ansaugraumes 16 liegen. Das freie innere Ende des Schenkels 15 des Randes 6 steht mit dem Kupplungsteil 8 der Sekundärmasse 7 in dichtender Reibverbindung. Es ergibt sich somit eine ringsum geschlossene, dichte Druckkammer 18.

Wie Fig. 1 zeigt, liegt der untere Teil des Randes 6 der Primärmasse 1 mit seiner Antriebsseite 29 am Planetenradträger 10 und mit seiner Abtriebsseite an einem Lagerring 30 an, der sich seinerseits am Kupplungsteil 8 der Sekundärmasse 7 abstützt.

Vorteilhaft ist dieses aus den Teilen 10,29,6,8 gebildete Axiallager als Festlager ausgebildet. Dies kannn dadurch geschehen, daß zwischen dem Planetenradträger 10 und der Antriebsseite 29 des Randes 6 durch entsprechende Oberflächengestaltung oder Werkstoffwahl eine sehr geringe Gleitreibung erfolgt. In diesem Fall könnte das von den Teilen 27,28 gebildete Axiallager auch entfallen.

Von den radial inneren Enden der Taschen 12 führen Druckkanäle 17 für das Dämpfungsmittel in eine sich um die Nabe 9 erstreckende, im Kupplungsteil 8 der Sekundärmasse 7 angeordnete ringförmige Druckkammer 18, die durch radiale Rippen 19 unterteilt ist. Diese Druckkammer 18 wird antriebsseitig von einer scheibenförmigen Trennwand 20 des Planetenradträgers 10 der Sekundärmasse 7 begrenzt.

In der Trennwand 20 ist mindestens eine Überlaufbohrung 21 vorgesehen, die durch einen geschliffenen, geschlitzten Ring 22 verschließbar ist. Dieser Ring 22 ist axial beweglich gelagert, wobei die Rippen 19 der Druckkammer 18 so geformt sind, daß sie seine axiale Bewegbarkeit begrenzen. Infolge eines in der Druckkammer 18 herrschenden Überdruckes liegt der Ring 22 flach gegen die Trennwand 20 an. Bei hoher Drehzahl bewegen sich die Enden des Ringes 22 infolge der Fliehkraft nach außen und verschließen die Überlaufbohrung(en) 21. Bei einem Lastwechsel im Schubbetrieb kann mit dieser Ausführung eine Öffnung der Überlaufbohrung 21 von der Saugseite her durch axiales Zurückdrängen des Ringes 22 erfolgen.

Ferner ist in der Trennwand 20 mindestens eine weitere, durch ein federbelastetes Ventil 31 verschließbare Bohrung 32 vorgesehen, die als Überdruckventile arbeiten.

Die ringförmige Druckkammer 18 ist so bemessen, daß sie gegenüber dem Fördervolumen eines Kegelrades je Umdrehung der Primärmasse 1 ein wesentlich größeres Volumen aufweist. Dieses Verhältnis Kappa soll etwa den Wert 5 betragen und ist damit wesentlich geringer als bei den bekannten Ausführungen, bei denen jeder Zahnradpumpe eine Einrichtung zur drehzahlabhängigen Steuerung des Förderflusses zugeordnet ist, deren Einzelvolumen jedoch sehr gering sind. Bei der erfindungsgemäßen Ausführung übernimmt diese ringförmige Druckkammer 18 die Aufgabe dieser Einrichtungen. Durch die zentrale Zuführung der Druckleitungen 17 gelangt das Dämpfungsmittel in die Druckkammer 18, die wie eine Zentrifuge wirkt und bei der das Dämpfungsmittel sich radial nach außen bewegt. Dabei erfolgt eine starke Durchmischung mit Luft, was zu einer elastischen Speicherwirkung führt.

Wie die Zeichnung zeigt, sind die Scherflächen zwischen Primär- und Sekundärmasse 1,7 sehr gering, so daß sich auch eine geringe Flüssigkeitsreibung ergibt. Es entfallen nahezu alle bisher üblichen Spiralfedern, Schwingkolbeneinrichtungen und Keile, so daß eine sehr wirtschaftliche Fertigung möglich ist.

Fig.7 zeigt eine andere Ausführungsform eines Drehschwingungsdämpfers nach der Erfindung. Soweit diese Figur mit Fig.1 übereinstimmt, sind die gleichen Bezugszeichen verwendet und nicht weiter erläutert.

Anstelle der kegelförmigen Planetenzahnräder 13 sind hier zylindrische Kronräder 33 vorgesehen, die in entsprechend zylindrischen Taschen 36 sitzen. Der Randteil 15 hat dementsprechend eine Kronverzahnung, die ebenfalls spanlos aus dem Blech dieses Teiles 15 herausgeformt sein kann.

Für diese Ausführung gelten die gleichen Vorteile wie für die oben beschriebene Ausführung mit Kegelradverzahnung.

## Patentansprüche

1. Drehschwingungsdämpfer, bestehend aus einer mit einer Antriebswelle (2) umlaufenden, antriebsseitigen Primärmasse (1), die mit in einer abtriebsseitigen, umlaufenden Sekundärmasse (7) achsfrei gehaltenen Planetenzahnrädern (13) in Eingriffsverbindung steht und mit diesen Planetenzahnrädern (13) Zahnradpumpen für ein in einem geschlossenen Förderkreis geführtes, flüssiges Dämpfungsmittel bildet, wobei die Primärmasse (1) und die Sekundärmasse (7) ein abgedichtetes Gehäuse für das Dämpfungsmittel bilden, und Druckkanäle (17) der Zahnradpumpen über Einrichtungen (18,21,22) zur drehzahlabhängigen Steuerung des Förderflusses sowie Einrichtungen (23,24) zum Abbau von Druckspitzen mit dem Ansaugraum (16) verbunden sind
**dadurch gekennzeichnet,**
daß die Planetenzahnräder (13) als mit ihrer Achse radial zur Antriebswelle (2) angeordnete Kegelzahnräder ausgebildet sind, die sich radial von der Antriebswelle (2) nach außen erweitern, die ohne Achszapfen in Taschen (12) eines Planetenradträgers (10) der Sekundärmasse (7) aufgenommen sind und mit einer Kegelradverzahnung (14) der Primärmasse (1) zusammenwirken.

2. Drehschwingungsdämpfer, bestehend aus einer mit einer Antriebswelle (2) umlaufenden, antriebsseitigen Primärmasse (1), die mit in einer triebsseitigen, umlaufenden Sekundärmasse (7) achsfrei gehaltenen Planetenzahnrädern (33) in Eingriffsverbindung steht und mit diesen Planetenzahnrädern (33) Zahnradpumpen für ein in einem geschlossenen Förderkreis geführtes, flüssiges Dämpfungsmittel bildet, wobei die Primärmasse (1) und die Sekundärmasse (7) ein abgedichtetes Gehäuse für das Dämpfungsmittel bilden, und Druckkanäle (17) der Zahnradpumpen über Einrichtungen (18,21,22) zur drehzahlabhängigen Steuerung des Förderflusses sowie Einrichtungen (23,24) zum Abbau von Druckspitzen mit dem Ansaugraum (16) verbunden sind,
**dadurch gekennzeichnet,**
daß die Planetenzahnräder (33) als mit ihrer Achse radial zur Antriebswelle (2) angeordnete, zylindrische Kronräder ausgebildet sind, die ohne Achszapfen in Taschen (36) eines Planetenradträgers (10) der Sekundärmasse (7) aufgenommen sind und mit einer Kronverzahnung (34) der Primärmasse (1) zusammenwirken.

3. Drehschwingungsdämpfer nach Anspruch 1 oder 2, **dadurch gekennzeichnet**, daß die Ansaugstellen (35) für das Dämpfungsmittel am radial äußeren Ende der Planetenzahnräder (13,33) sind und die radial inneren Enden der Planetenzahnräder (13,33) mit Druckkanälen (17) verbunden sind.

4. Drehschwingungsdämpfer nach einem der Ansprüche 1 bis 3, **dadurch gekennzeichnet**, daß um eine Nabe (9) der Sekundärmasse (7) eine mit den Druckkanälen (17) verbundene, ringförmige Druckkammer (18) angeordnet ist, die über mindestens eine drehzahlabhängig schließende Steuereinrichtung (21,22) mit dem Ansaugraum (16) zwischen Primär- und Sekundärmasse (1,7) verbunden ist.

5. Drehschwingungsdämpfer nach Anspruch 4, **dadurch gekennzeichnet**, daß die drehzahlabhängig schließende Steuereinrichtung (21,22) aus mindestens einer Überströmbohrung (21) in der Trennwand (20) zwischen Primär- und Sekundärmasse (1,.7) besteht, die durch einen in der Druckkammer (18) angeordneten dicht anliegenden, geschlitzten Ring (22) bei einer bestimmten Fliehkraft verschließbar ist.

6. Drehschwingungsdämpfer nach Anspruch 5, **dadurch gekennzeichnet**, daß der geschlitzte Ring (22) axial verschiebbar angeordnet ist.

7. Drehschwingungsdämpfer nach einem der Ansprüche 4 bis 6, **dadurch gekennzeichnet**, daß in der Trennwand (20) zwischen Primär- und Sekundärmasse (1,7) mindestens eine durch ein federbelastetes Ventil (31) verschließbare Öffnung (32) vorgesehen ist.

8. Drehschwingungsdämpfer nach einem der Ansprüche 1 bis 7, **dadurch gekennzeichnet**, daß die Primärmasse (1) aus einer Scheibe (3) mit einem im Längsschnitt U-förmigen Rand (6) gebildet ist, deren freier Schenkel (15) aus Blech besteht, dichtend mit der Sekundärmasse (7) in Reibverbindung steht und auf seiner Innenseite eine aus dem Blech spanlos geformte Verzahnung (14, 34) aufweist.

9. Drehschwingungsdämpfer nach einem der Ansprüche 1 bis 8, **dadurch gekennzeichnet**, daß jede Tasche (12) des Planetenradträgers (10) im Querschnitt einen Halbkreis (23) mit angesetzten tangentialen Verlängerungen (24,25) bildet.

10. Drehschwingungsdämpfer nach Anspruch 9, **dadurch gekennzeichnet**, daß die Längsmittelebene (L) jeder Tasche (12) mit der Senkrechten (S) auf der sie einschließenden Außenseite (26) des Planetenradträgers (10) einen Schränkungswinkel (β) einschließt, derart, daß die eine tangentiale Verlängerung (25) kürzer ist, als die andere (24).

11. Drehschwingungsdämpfer nach einem der Ansprüche 4 bis 10, **dadurch gekennzeichnet**, daß die Nabe (9) der Sekundärmasse (7) auf einer Nabe (5) der Primärmasse (1) sitzt und mit dieser ein Axiallager mit relativ großem Axialspiel bildet.

12. Drehschwingungsdämpfer nach einem der Ansprüche 4 bis 11 **dadurch gekennzeichnet,** daß die Primärmasse (1) mit ihrem Rand (6) antriebsseitig mit einer Wandung 29 hoher Gleitfähigkeit am Planetenradträger (10) und abtriebsseitig an einem am Kupplungsteil (8) der Sekundärmasse (7) abgestützten Lagerring (30) gleitbar anliegt und mit diesen ein festes Axiallager bildet.

## Claims

1. Rotary oscillation damper, consisting of a primary mass (1) at the drive side, revolving with a drive shaft (2), which primary mass is in engagement with planet pinions (13) held axially free in a revolving secondary mass (7) at the take-off side and forms, together with these planet pinions (13), gear wheel pumps for a liquid damping agent conducted in a closed propelling circuit, wherein the primary mass (1) and the secondary mass (7) form a sealed casing for the damping agent, and pressure channels (17) of the gear wheel pumps are connected to the suction chamber (16) via devices (18, 21, 22) for the rotational speed-dependent control of the propellant flow and devices (23, 24) for reduction of pressure peaks,
characterized in that,
the planet pinions (13) are constructed as bevel gears disposed with their axis radially to the drive shaft (2), which diverge radially outwards from the drive shaft (2), which are seated without shaft journals in pockets (12) of a pinion cage (10) of the secondary mass (7) and cooperate with a bevel gear tooth system (14) of the primary mass (1).

2. Rotary oscillation damper, consisting of a primary mass (1) at the drive side revolving with a drive shaft (2), which primary mass is in engagement with planet pinions (33) held axially free in a secondary mass (7) revolving at the take-off side, and forms, together with these planet pinions (33), gear wheel pumps for a liquid damping agent conducted in a closed propelling circuit, wherein.the primary mass (1) and the secondary mass (7) form a sealed casing for the damping agent, and pressure channels (17) of the gear wheel pumps are connected to the suction chamber (16) via devices (18, 21, 22) for the rotational speed-dependent control of the propellant flow and devices (23, 24) for reduction of pressure peaks,
characterized in that,
the planet pinions (33) are constructed as cylindrical crown gear wheels disposed with their axis radially to the drive shaft (2), which are seated without shaft journals in pockets (36) of a pinion cage (10) of the secondary mass (7) and cooperate with a crown gear tooth system (34) of the primary mass (1).

3. Rotary oscillation damper according to claim 1 or 2, characterized in that the intake points (35) for the damping agent are situated at the radially outer end of the planet pinions (13, 33) and the radially inner ends of the planet pinions (13, 33) are connected to delivery channels (17).

4. Rotary oscillation damper according to one of claims 1 to 3, characterized in that an annular pressure chamber (18), connected to the delivery channels (17), is situated around a hub (9) of the secondary mass (7), which pressure chamber is connected to the suction chamber (16) between primary and secondary masses (1, 7) via at least one control device (21, 22) that closes as a function of rotational speed.

5. Rotary oscillation damper according to claim 4, characterized in that the control device (21, 22) that closes as a function of rotational speed consists of at least one overflow bore (21) in the partition wall (20) between primary and secondary masses (1, 7), which can be closed at a specific centrifugal force by a slit ring (22) disposed in the pressure chamber (18) and lying in sealing bearing.

6. Rotary oscillation damper according to claim 5, characterized in that the slit ring (22) is disposed axially displaceable.

7. Rotary oscillation damper according to one of claims 4 to 6, characterized in that, in the partition wall (20) between primary and secondary masses (1, 7), at least one opening (32) which can be closed by a spring-loaded valve (31), is provided.

8. Rotary oscillation damper according to one of claims 1 to 7, characterized in that the primary mass (1) consists of a disc (3) having a rim (6) that is U-shaped in longitudinal section, the free arm (15) of which is of sheet metal, is sealingly in friction connection with the secondary mass (7) and possesses, on its inner face, a set of teeth (14, 34) formed from the sheet metal without chip removal.

9. Rotary oscillation damper according to one of claims 1 to 8, characterized in that each pocket (12) of the pinion cage (10) forms, in cross-section, a semicircle (23) with added tangential extensions (24, 25).

10. Rotary oscillation damper according to claim 9, characterized in that the longitudinal central plane (L) of each pocket (12) makes, with the perpendicular (S) on the outer side (26) of the pinion cage (10) that encloses it, an offset angle (β) in such a way that the one tangential extension (25) is shorter than the other (24).

11. Rotary oscillation damper according to one of claims 4 to 10, characterized in that the hub (9) of the secondary mass (7) sits on a hub (5) of the primary mass (1) and forms with it an axial bearing having a relatively large axial clearance.

12. Rotary oscillation damper according to one of claims 4 to 11, characterized in that the primary mass (1) bears slidably with its rim (6) at the drive side against a wall (29) of high sliding capability on the pinion cage (10) and, at the take-off side, against a bearing ring (30) supported on the coupling component (8) of the secondary mass (7) and forms with them a fixed axial bearing.

## Revendications

1. Amortisseur de vibrations torsionelles comprenant du côté de commande un corps primaire (1) rotatif avec un arbre menant (2), lequelle mord dans des roues dentées planétaires (13) maintenues sans axe dans un corps secondaire (7) rotatif situé du côté de sortie et forme avec ces roues dentées planétaires (13) des pompes à engrenages pour un fluide retardateur liquide circulant dans un circuit de refoulement fermé, le corps primaire (1) et le corps secondaire (7) formant une enveloppe étanchée pour le fluide retardateur, et des conduites de refoulement (17) des pompes à engrenage étant reliées à la chambre d'amorçage (16) par l'intermédiaire de dispositifs (18,21,22) destinés à la commande du flux de refoulement, et ce en fonction de la vitesse de rotation, ainsi que de dispositifs (23,24) destinés à réduire les pics de pression,
caractérisé en ce que
les roues dentées planétaires (13) sont conçues comme des roues dentées coniques s'élargissant vers l'extérieur radialement à l'arbre menant (2), dont l'axe est radial à ce même arbre (2), qui sont logées sans tourillons dans des poches (12) d'un support (10) de roues planétaires du corps secondaire (7) et ont un effet concourant avec un engrenage à roues coniques (14) du corps primaire (1).

2. Amortisseur de vibrations torsionelles comprenant du côté de commande un corps primaire (1) rotatif avec un arbre menant (2), lequelle mord dans des roues dentées planétaires (13) maintenues sans axe dans un corps secondaire (7) rotatif situé du côté de sortie et forme avec ces roues dentées planétaires (13) des pompes à engrenages pour un fluide retardateur liquide circulant dans un circuit de refoulement fermé, le corps primaire (1) et le corps secondaire (7) formant une enveloppe étanchée pour le fluide retardateur, et des conduites de refoulement (17) des pompes à engrenage étant reliées à la chambre d'amorçage (16) par l'intermédiaire de dispositifs (18,21,22) destinés à la commande du flux de refoulement, et ce en fonction de la vitesse de rotation, ainsi que de dispositifs (23,24) destinés à réduire les pics de pression,
caractérisé en ce que
les roues dentées planétaires (33) sont conçues comme des roues de chant cylindriques dont l'axe est radial à l'arbre meant (2), qui sont logées sans tourillons dans des poches (36) d'un support (10) de roues planétaires du corps secondaire (7) et ont un effet concourant avec un engrenage de chant (34) du corps primaire (1).

3. Amortisseur de vibrations torsionelles selon la revendication 1 ou 2 caractérisé en ce que les points d'amorçage (35) pour le moyen retardateur sont situés sur l'extrémité radialement extérieure des roues dentées planétaires (13, 33) et que les extrémités radialement intérieures des roues dentées planétaires (13,33) sont reliées à des conduites de refoulement (17).

4. Amortisseur de vibrations torsionelles selon l'une des revendications 1 à 3 caractérisé en ce qu'une chambre de compression (18) circulaire reliée aux conduites de refoulement (17), qui est raccordée à la chambre d'amorçage (16) entre le corps primaire (1) et le corps secondaire (7) par au moins un dispositif de commande (21,22) de fermeture fonctionnant selon la vitesse de rotation, est disposée autour d'un moyeu (9) du corps secondaire (7).

5. Amortisseur de vibrations torsionelles selon la revendication 4 caractérisé en ce que le dispositif de commande (21,22) de fermeture fonctionnant selon la vitesse de rotation se compose d'au moins un alésage de trop-plein (21) situé dans la paroi de séparation (20) entre le corps primaire (1) et le corps secondaire (7), que peut obturer, lorsque la force centrifuge atteint un certain niveau, une bague fendue (22) étanche placée dans la chambre de compression (18).

6. Amortisseur de vibrations torsionelles selon la revendication 5 caractérisé en ce que la bague fendue (22) est disposée de manière à pouvoir glisser axialement.

7. Amortisseur de vibrations torsionelles selon l'une des revendications 4 à 6 caractérisé en ce que, dans la paroi de séparation entre le corps primaire (1) et le corps secondaire (7), on a prévu au moins une ouverture (32) que peut obturer une soupape à ressort (31).

8. Amortisseur de vibrations torsionelles selon l'une des revendications 1 à 7 caractérisé en ce que le corps primaire (1) est formé par un disque (3) présentant un bord (6) en forme en U dans sa section longitudinale, dont le côté libre (15) est en tôle, qui est en contact étanche par friction avec le corps secondaire (7) et dont la face intérieure présente une denture (14, 34) formée dans la tôle.

9. Amortisseur de vibrations torsionelles selon l'une des revendications 1 à 8 caractérisé en ce que chaque poche (12) du support (10) de roues planétaires forme dans sa section transversale un demi-cercle (23) avec des prolongements (24,25) tangentiels rapportés.

10. Amortisseur de vibrations torsionelles selon la revendication 9 caractérisé en ce que le plan médian longitudinal (L) de chaque poche (12) avec la perpendiculaire (S) sur la face extérieure (26) du support (10) de roues planétaires incluant ce plan, inclut un angle d'avoyage (β) de manière à ce que le prolongement tangentiel (25) soit plus court que l'autre (24).

11. Amortisseur de vibrations torsionelles selon l'une des revendications 1 à 10 caractérisé en ce que le moyeu (9) du corps secondaire (7) est assis sur un moyeu (5) du corps primaire (1) et forme avec celui-ci une butée dont le jeu axial est relativement important.

12. Amortisseur de vibrations torsionelles selon l'une des revendications 1 à 11 caractérisé en ce que du côté de commande, le bord (6) du corps primaire (1) porte, avec une paroi (29) présentant de bonnes propriétés de glissement, sur le support (10) de roues planétaires alors que du côté de sortie, il porte coulissant sur une bague de coussinet (30) s'appuyant sur le demi-accouplement (8) du corps secondaire (7) et que le corps primaire (1) forme avec ceux-ci une butée fixe.
